# EUROPÄISCHE PATENTSCHRIFT

(11) **EP 0 862 253 B1**
(45) Veröffentlichungstag und Bekanntmachung des Hinweises auf die Patenterteilung: **16.08.2001**
(21) Anmeldenummer: 97103394.9
(22) Anmeldetag: 01.03.1997
(51) Int. Cl.: H02G 3/04

(54) **Kabelkanal, wie Installations-oder Geräteeinbaukanal**
Cable duct such as electrical installation duct or apparatus mounting duct
Canalisation pour câbles, tel que canalisation pour installation électrique ou montage d'appareils

(43) Veröffentlichungstag der Anmeldung: 02.09.1998
(73) Patentinhaber: Hermann Kleinhuis GmbH. & Co. KG, D-58507 Lüdenscheid (DE)
(72) Erfinder: Kleinkorres,Uwe, 58300 Wetter/Ruhr (DE)
(74) Vertreter: Buse, Karl Georg, Dipl.-Phys.

(56) Entgegenhaltungen:
- DE-A- 3 925 010
- DE-A- 4 103 707
- DE-U- 7 803 034

## Beschreibung

Die Erfindung bezieht sich auf einen Kabelkanal, wie Installations- oder Geräteeinbaukanal, bestehend aus einem einendig offenen Unterteil und einem damit lösbar verbindbaren, deckelartigen Oberteil.

Kabelkanäle, wie sie durch die DE 41 03 707 A1 bekanntgeworden sind, weisen im oberen Bereich ihrer Seitenwandungen des Kabelkanalunterteils aufeinander zu gerichtete Flansche auf. Diese sind mit einer Mehrzahl von im Abstand voneinander liegenden Durchbrechungen versehen. Diese Durchbrechungen werden wahlweise zum Anbringen von Halteklammern benutzt. Dies bedeutet, daß sie zum Anbringen von mit Haltestiften versehenen Halteklammern benutzt werden, die jeweils eine Brücke zwischen den beiden Seitenwandungen des Kabelkanalunterteils bilden. Bei derartigen Kabelkanälen ist es somit zwingend erforderlich, in den aufeinander zu gerichteten Flanschen des Kabelkanalunterteils Durchbrechungen zu erzeugen, die der Verbindung mit den Halteklammern dienen. Eine solche Ausbildung des Kabelkanals hat zunächst den Nachteil, daß die Flansche des Kabelkanalunterteils mit einer Vielzahl von Durchbrechungen versehen werden müssen. Dadurch wird nicht nur die Fertigung des Kabelkanalunterteils erschwert, sondern es ergeben sich auch Nachteile bei der Benutzung. Dies deshalb, weil es sich in der Praxis gezeigt hat, daß das genaue Einhalten der Maße der anzubringenden Durchbrechungen in den Flanschen bzw. das Einhalten der gegenseitigen Abstände der Durchbrechungen zueinander schwierig ist. Es ergeben sich somit beim Anbringen der Halteklammern an einem Kabelkanalunterteil, wie die Praxis zeigt, Schwierigkeiten, derart, daß die beiden auf gegenüberliegenden Seiten angeordneten Durchbrechungen in den beiden Flanschen des Kabelkanalunterteils nicht den exakten genauen Abstand voneinander haben. Daher kann sowohl ein Untermaß als auch ein Übermaß beim gegenseitigen Abstand vorhanden sein. Im erstgenannten Fall erfolgt beim Anbringen der Halteklammer ein Aneinandernähern der gegenüberliegenden Seitenwände des Kabelkanalunterteils, im zweiten Fall ein Aufspreizen. Beides erschwert das Anbringen der Halteklammer.

Aus der Druckschrift DE 78 03 034 U1 ist ein Kabelkanal bekannt, dessen obere Ränder der Seitenwände seines Kanalunterteiles mit einer Halteklammer verbindbar sind. Die Halteklammer weist zu diesem Zweck auf einer Seite eine Rastleiste auf, die in eine Haltenut am Rand der Seitenwände einclipsbar ist, während auf der anderen Seite der Halteklammer zwei beabstandete, in die Haltenut eingreifende, fingerartige Endabschnitte vorhanden sind, zwischen denen sich eine mittlere Zunge befindet, die mit einem eine Rastleiste bildenden Vorsprung eine Rastnase der Haltenut hintergreift. Die einmal in Verbindungslage gebrachte Halteklammer läßt sich danach nicht mehr ohne weiteres und ohne Werkzeug lösen. Außerdem ist für das gewünschte Zusammenwirken von Halteklammer und Kabelkanal ein Stützfuß an der Halteklammer erforderlich, der als Winkelschenkel ausgebildet ist und parallel zu einer Seitenwand des Kabelkanals verlaufend in einer von einer Bodenleiste gebildeten Nut zusätzlich abgestützt ist. Damit ist ein Aufbiegen der betreffenden Kanalseitenwand zu Lösungszwecken der Halteklammer ausgeschlossen.

Aufgabe der Erfindung ist es, zum einen das Anbringen von Durchbrechungen in den Flanschen der Seitenwände des Kabelkanalunterteils ganz zu vermeiden und andererseits eine im Bedarfsfall wieder lösbare Verbindung der Halteklammern mit dem Kabelkanalunterteil zu schaffen, wobei jedoch nach erfolgter Installation und Einlegung von Kabeln in den Kabelkanal eine gesicherte Verbindungslage der Halteklammer mit dem Kabelkanal erzielbar ist.

Diese Aufgabe ist mit den im Patentanspruch 1 genannten Merkmalen gelöst. Damit hat diese Halteklammer gegenüber dem Bekannten wesentliche Vorteile. Zunächst entfällt das Anbringen von Durchbrechungen in den Flanschen der Seitenwände des Kabelkanals bei seiner Herstellung. Zum anderen sind die beiden Enden der Halteklammer nicht gleichgestaltet, sondern derart unterschiedlich, daß an der einen Seite der Halteklammer Verlängerungen und eine Zunge vorhanden sind, während das gegenüberliegende andere Ende einen Sicherheitsanker aufweist. Das mit der Verlängerung und der Zunge versehene eine Ende der Halteklammer kann einfach, und zwar an beliebiger Stelle des Kabelkanalunterteils in die Öffnung des gabelförmigen Endteils des Kabelkanalunterteils eingesetzt werden. Die diametral gegenüberliegende andere Seite des Kabelkanalunterteils wird demgegenüber nur hintergriffen, um eine Aufhebung der funktionsrelevanten Kabelkanalvorspannung zu verhindern. Beim Anbringen der erfindungsgemäß ausgebildeten Halteklammer fallen somit sämtliche Verspannungen der Seitenwände des Kabelkanalunterteils fort, sei es nun, daß diese durch Aufspreizen oder Einandernähern entstehen. Der Benutzer muß auch nicht in umständlicher, und damit zeitraubender Weise Haltestifte der Halteklammer in die Durchbrechung einführen. Infolgedessen, daß der an dem einen Ende der Halteklammer angeordnete Sicherheitsanker zunächst in einer Bereitschaftslage der Halteklammer auf der Oberseite des einen Schenkels des anderen gabelförmigen Endteiles des Kabelkanalunterteils liegt, kann mittels einfacher Druckeinwirkung dieser Endteil der Halteklammer aus der Bereitschaftslage in die wirksame Endlage überführt werden. Dies bedeutet, daß z.B. durch einen Schlag auf die Oberseite der Halteklammer das Überführen in die wirksame Endlage durchgeführt wird. Dadurch gelangt das freie Ende des Sicherheitshakens in den Bereich einer Abstützfläche des unteren Schenkels des anderen gabelförmigen Endteiles der Seitenwand des Kabelkanalunterteils. Es erfolgt ein Hintergreifen dieser beiden Teile. Der erfindungsgemäße Sicherheitsanker am einen Ende der Halteklammer verhindert ihr Aufziehen.

Es empfiehlt sich, den Verbindungssteg zwischen den Schenkeln des gabelförmigen Endteiles jeweils außenliegend eine Einbuchtung zum Eingriff eines Halteteils des deckelartigen Oberteils aufweisen zu lassen.

Bei der erfindungsgemäßen Ausbildung des Kabelkanals und der Halteklammer ist nach dem Anbringen eine axiale Verschiebung der Halteklammer in Kabelkanalrichtung möglich. Der Benutzer kann daher die Halterklammern an der von ihm gewünschten Stelle an dem Kabelkanalunterteil anbringen. Danach ist aber immer noch eine Längsverschiebung möglich. Auf der anderen Seite wird dem Benutzer aber auch eine Möglichkeit gegeben, die Halteklammer an der von ihm eingestellten Stelle bei Bedarf zu fixieren. Um dieses zu ermöglichen, ist nach einem weiteren Vorschlag der Erfindung der Halteklammer ein Sperrelement zu seinem zeitweiligen Festlegen an einem der beiden gabelförmigen Endteile des Kabelkanals zugeordnet. Das Sperrelement durchgreift zweckmäßig eine Durchbrechung der Halteklammer und hat einen Sperrer, der in seiner Sperrlage an der Außenseite des unteren Schenkels des gabelförmigen Endteiles des Unterteils des Kabelkanals anliegt.

Es empfiehlt sich, das Sperrelement einen Kopf mit einem Schlitz zum Angriff eines Betätigungselementes, wie eines Schraubendrehers, aufweisen zu lassen.

Bevorzugt wird eine bajonettverschlußartige Verbindung zwischen dem Sperrelement und der Halteklammer.

Erfindungsgemäß ist auch vorgesehen, mehrere Halteklammern entweder zu einem Paket oder zu einer Kette zu verbinden. Bei einem Paket von Halteklammern liegen mehrere Halteklammern übereinander, bei einer Kette dagegen nebeneinander, sind also horizontal ausgerichtet.

Um diese Paketbildung zu ermöglichen, ist erfindungsgemäß vorgesehen, an der einen Seite des Mittelteils der Halteklammer nach außen vorragende Halter mit Haltehaken anzuordnen. Diese Haltehaken der Halter können wahlweise mit einer Schulter des Kopfes einer Halteleiste des Bodens des Kabelkanals oder zur Bildung eines Paketes von Halteklammern mit der Gegenfläche einer benachbarten zweiten Halteklammer zusammenwirken.

Dabei ist vorgesehen, die Halter der Halteklammer jeweils an dem einen Begrenzungsrand einer Durchbrechung des Mittelteils der Halteklammer anzuordnen.

Es empfiehlt sich, die dem Mittelteil der Halteklammer angeformten beiden Verlängerungen jeweils an der Außenseite des einen Endes der Halteklammer anzuordnen und die dort vorgesehene Zunge zwischen den beiden Verlängerungen liegen zu lassen.

Dabei ist die Durchbrechung für das Sperrelement zweckmäßig in der Zunge der Halteklammer angeordnet. Das Sperrelement kann dann unter Benutzung einer bajonettartigen Verbindung oder einer Rast-Verbindung an der Zunge befestigt werden.

Zur Ermöglichung der Kettenbildung von mehreren Klammern ist vorgesehen, die Halteklammern Kupplungen und Aufnahmen für solche Kupplungen aufweisen zu lassen. Mit diesen Kupplungen und den Aufnahmen ist in einfacher Weise die Bildung einer Halteklammerkette möglich, d.h. eine Vielzahl von Klammern können in einer Ebene liegend zu einer Kette zusammengefaßt werden. Von Vorteil ist dabei, daß sowohl die Kupplungen als auch die Aufnahmen der Halteklammer bei deren Herstellung miterzeugt werden.

Dabei ist vorgesehen, jede Kupplung aus zwei, durch einen Schlitz voneinander getrennte federnde Arme zu bilden, wobei die Arme jeder Kupplung der Halteklammer einen Haken oder eine Rast aufweisen, die beim Zusammenkuppeln hinter eine Begrenzungswand einer Aufnahme einer zweiten Halteklammer greifen.

Die erfindungsgemäß ausgebildeten Halteklammern können auch zur Unterbringung eines an sich bekannten elektrischen Installationselementes in dem Unterbringungsraum des Kabelkanalunterteils dienen. In diesem Falle werden in dem Kabelkanalunterteil mehrere, insbesondere zwei Halteklammern in einem solchen Abstand voneinander angebracht, der der Breite eines bekannten elektrischen Installationselementes entspricht. Durch Zusammenwirken von Kupplungen der Halteklammern und des elektrischen Installationsgerätes bzw. von Aufnahmen dieser Teile erfolgt dann die Verbindung zwischen den Halteklammern und dem elektrischen Installationselement, wobei das elektrische Installationselement zwischen den beiden Halteklammern angeordnet ist. Durch Benutzung der vorhandenen Sperrelemente der Halteklammern kann dann dafür gesorgt werden, daß eine Lagefixierung der Baueinheit, bestehend aus den beiden Halteklammern und dem elektrischen Installationselement, erfolgt. Die Kupplungen der Halteklammern können gewünschtenfalls auch als Transportsicherung der Halteklammer in den gabelförmigen Rastteilen der Seitenwände benutzt werden.

Wenn die Halteklammer in beliebiger Position mit seinem einen Ende in das gabelförmige freie Ende der einen Seitenwand des Kabelkanalunterteils eingesetzt wird, dann wird dadurch eine scharnierartige Verbindung zwischen dem eingesetzten Ende der Halteklammer und dem einen gabelförmigen Ende der Seitenwand des Kabelkanalunterteils erreicht. Wenn bei dieser Ausbildung und Anordnung ein Anheben des anderen Endes der Halteklammer erfolgt, um so eine Öffnung zum Einbringen von Leitungen, Kabeln od.dgl. zu erzielen, dann wird durch die vorhandene Gestaltung und Anordnung des in dies gabelförmige Ende eingreifenden Teiles der Halteklammer dafür gesorgt, daß nach Aufhören der äußeren Kraft auf das gegenüberliegende andere Ende der Halteklammer dieses Ende wieder in seine ursprüngliche Lage zurückkehrt. Dadurch wird die beim Anheben gebildete Einführungsöffnung automatisch geschlossen. Es wird somit eine automatische Rückkehr des einen Endes der Halteklammer aus der Öffnungslage in die Schließlage erzielt. Dadurch wird ein Herausfallen der eingebrachten Kabeln, Leitungen od.dgl. aus dem Unterbringungsraum des Kabelkanals verhindert.

Die Halteklammer hat zweckmäßig an ihrer einen Seite Eingriffsräume für die Stützenden von Trennwänden. Diese Trennwände werden benutzt, um den großvolumigen Unterbringungsraum des Kabelkanalunterteils zu unterteilen. Bei der Anbringung solcher Trennwände werden diese mit ihrem einen Ende mit den Leisten am Boden des Kabelkanalunterteils bei Bedarf verbunden, während die gegenüberliegenden Stützenden in die vorgesehenen Eingriffsräume in der Halteklammer eingreifen. Auf diese Weise wird durch die Trennwände der großvolumige Unterbringungsraum des Kabelkanalunterteils in mehrere, beispielsweise in drei Kammern unterteilt. Zugleich werden die angebrachten Halteklammern etwa in ihrer Mitte unterstützt.

In den Zeichnungen ist die Erfindung in mehreren Ausführungsbeispielen dargestellt, und zwar zeigen:
- Fig. 1: einen Schnitt durch einen erfindungsgemäß ausgebildeten Kabelkanal bei fehlendem Oberteil, mit einer Halteklammer, die sich in einer Bereitschaftslage befindet,
- Fig. 2: einen Schnitt durch den erfindungsgemäßen Kabelkanal entsprechend der Fig. 1, jedoch bei aufgesetztem Oberteil und mit einer Halteklammer, die in ihre wirksame Lage überführt ist,
- Fig. 3: eine Draufsicht auf den Kabelkanal gemäß den Fig. 1 und 2, jedoch bei fehlendem Oberteil, wobei der Kabelkanal teilweise weggebrochen ist, und bei der eine Halteklammer angebracht ist,
- Fig. 4: in Draufsicht, teilweise weggebrochen und in vergrößertem Maßstab das eine Ende einer Halteklammer für den Kabelkanal nach den Fig. 1 bis 3,
- Fig. 5: einen Schnitt durch das eine Ende einer Halteklammer gemäß der Fig. 4, entlang der Linie V - V dieser Figur, teilweise weggebrochen und mit einem Sperrelement zum Festlegen der Halteklammer, welches sich in seiner wirksamen Lage befindet,
- Fig. 6: ein aus mehreren Halteklammern gebildetes Paket, welches einerseits an den Halteleisten im Boden des erfindungsgemäßen Kabelkanals befestigt ist, und bei der die Halteklammern untereinander lösbar verbunden sind, teilweise im Schnitt und teilweise weggebrochen sowie im vergrößerten Maßstab,
- Fig. 7: einen vergrößerten Teilschnitt durch den Kabelkanal gemäß der Fig. 2 im Bereich des Kreises VII der Fig. 2,
- Fig. 8: eine Draufsicht auf zwei Halteklammern für einen Kabelkanal gemäß den Fig. 1 und 2, wobei aus den beiden Halteklammern aus eine Halteklammernkette gebildet ist,
- Fig. 9: einen Schnitt entlang der Linie IX - IX der Fig. 8 durch die beiden nebeneinanderliegenden Halteklammern,
- Fig. 10: in Draufsicht einen erfindungsgemäßen Kabelkanal bei fehlendem Oberteil, bei dem zwei Halteklammern entfernt voneinander am Unterteil festgelegt sind, und bei dem die Halteklammern ein elektrisches Installationsgerät zwischen sich aufnehmen, wobei der Kabelkanal teilweise weggeschnitten ist.
- Fig. 11: in Ansicht, teilweise weggeschnitten und im vergrößerten Maßstab, eine weitere Ausführungsform einer Halteklammer für den erfindungsgemäßen Kabelkanal, und
- Fig. 12: einen Schnitt durch die Halteklammer entlang der Linie XII - XII.

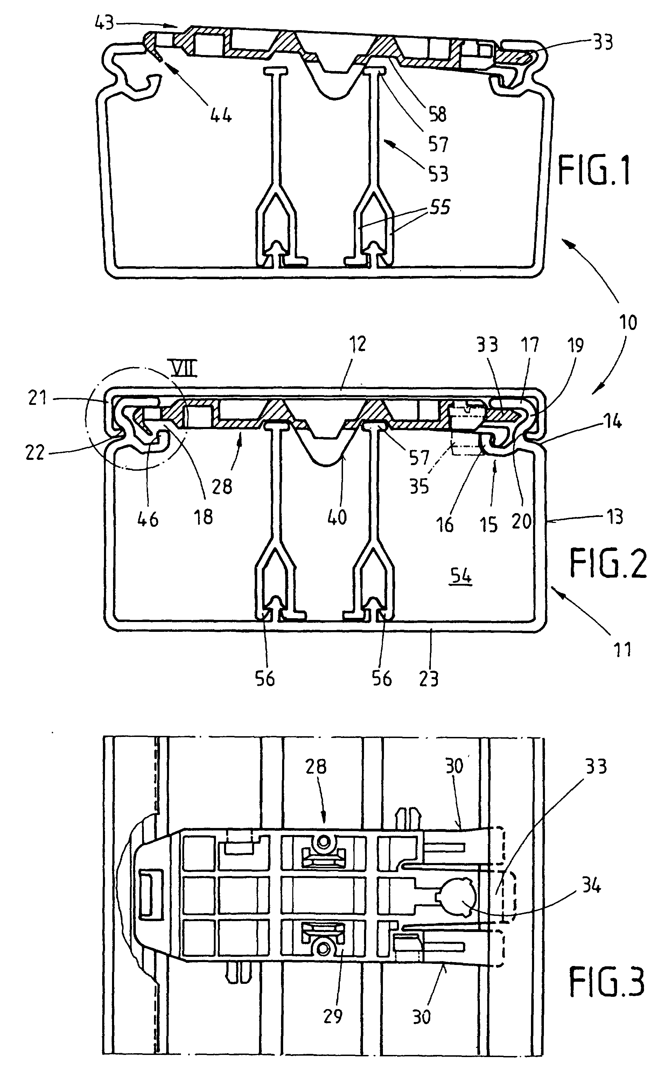

Es sei zunächst erwähnt, daß der in den Figuren der Zeichnungen wiedergegebene Kabelkanal nur stellvertretend für eine größere Anzahl von Kabelkanälen unterschiedlicher Bauart steht. Es kann sich dabei um Installationskanäle, Geräteeinbaukanäle od. dgl. handeln. Bei allen diesen Kabelkanälen können die Halteklammern eingesetzt werden. Der Einfachheit halber ist in der Fig. 1 - 3 der Zeichnungen nur eine einzige Halteklammer wiedergegeben. Selbstverständlich besteht die Möglichkeit, ein und demselben Kabelkanal eine Vielzahl von Halteklammern zuzuordnen. In der Regel genügt es, wenn pro lfd. Meter Kabelkanal zwei Halteklammern eingesetzt werden. Ferner fehlen in den meisten Zeichnungsfiguren wahlweise benutzbare, zusätzliche Einrichtungen. Alle diese fehlenden Teile können im übrigen eine an sich bekannte Ausbildung haben und in ebenfalls grundsätzlich bekannter Weise im Inneren des Kabelkanals untergebracht werden. Darüber hinaus ist in den Figuren der Zeichnungen nur derjenige Teil eines Kabelkanals wiedergegeben, der für das Verständnis der Erfindung Bedeutung hat. So ist z.B. auf die Darstellung der Unterbringung der Kabel, Leitungen od.dgl. im Inneren des Kabelkanals ganz verzichtet. Ebenso ist es offengelassen, wie der Kabelkanal befestigt oder aufgestellt wird.

Der dem Ausführungsbeispiel zugrundegelegte Kabelkanal ist generell mit 10 bezeichnet. Es kann sich dabei z.B. um einen Installationskanal, aber auch um einen Geräteeinbaukanal handeln. Dieser Kabelkanal 10 hat einen im Querschnitt gesehen etwa U-förmigen Unterteil, der einstückig aus einem der in der Elektroindustrie gebräuchlichen Werkstoffe, insbesondere Kunststoffe, hergestellt ist. Die obere, nicht näher bezeichnete Öffnung dieses Unterteiles 11 des Kabelkanals 10 kann durch einen deckelartigen Oberteil 12 verschlossen werden. Dieser Oberteil 12 ist ebenfalls einstückig aus einem Kunststoff hergestellt. In der Fig. 2 der Zeichnungen ist der deckelartige Oberteil 12 in seiner wirksamen Lage wiedergegeben, bei der er abnehmbar mit dem Unterteil 11 verbunden ist.

Wie aus den Fig. 1 und 2 der Zeichnungen ersichtlich ist, hat der Unterteil 11 des Kabelkanals 10 Seitenwände 13, die senkrecht und in Abstand zueinander angeordnet sind, und die in ihrem oberen Bereich jeweils in eine Schräge 14 übergehen. Diese Schräge 14 läuft dann bei jeder Seitenwand 13 in einen gabelförmigen Endteil 15 aus. Jeder der beiden gabelförmigen Endteile 15 besteht aus einem unteren Schenkel 16 und einem oberen Schenkel 17. Die vorderen freien Enden der beiden Schenkel 16 und 17 schließen eine Öffnung 18 ein, die in noch zu schildernder Weise zum Einbringen der beiden Enden einer Halteklammer benutzbar sind. Die Öffnungen 18 der beiden gabelförmigen Endteile 15 des Kanal-Unterteiles 11 bzw. der Seitenteile 13 sind aufeinander zu gerichtet.

Die rückwärtigen Enden der beiden Schenkel 16 und 17 sind durch einen Verbindungssteg 19 miteinander verbunden. In jedem Verbindungssteg 19 des gabelförmigen Endteiles 15 ist eine Einbuchtung 20 vorhanden, in die in der in Fig. 2 dargestellten Weise der Halteteil 22 des Oberteiles 12 eingreift. Dieser Halteteil 22 des Oberteiles 12 befindet sich am Ende einer Abwinkelung 21 des Oberteils. Die Anordnung ist derart, daß die Abwinkelungen 21 senkrecht zur Grundfläche des Oberteiles 12 liegen. Die Halteteile 22 sind dann um 90° zurückgebogen und liegen wieder horizontal zur Grundebene des Oberteiles 12.

Aus den Fig. 1 und 2 der Zeichnungen ist ersichtlich, daß die beiden Seitenwände 13 des Unterteils 11 des Kabelkanals 10 in ihrem unteren Bereich durch einen horizontal liegenden Boden 23 miteinander verbunden sind. Dieser Boden 23 hat an seiner Innenseite liegend mehrere in Längsrichtung des Kabelkanals 10 verlaufende Halteleisten 24, die dem Boden 23 unmittelbar angeformt sind. Im gewählten Ausführungsbeispiel sind dem Boden 23 zwei solcher Halteleisten 24 angeformt, die im Abstand und parallel zueinander liegen. Vom Boden 23 her ist bei den Halteleisten 24 jeweils ein Verbindungssteg 25 vorhanden, der in einen verbreiterten, im Querschnitt gesehen pilzförmigen Kopf 26 ausläuft. Durch die Durchmesserunterschiede sind somit an jeder Halteleiste 24 mit 27 bezeichnete Schultern gebildet, die als Gegenkupplungen benutzbar sind, um eine lösbare Verbindung mit solchen Teilen des Kabelkanals erzielen zu können, die über passende Kupplungen verfügen.

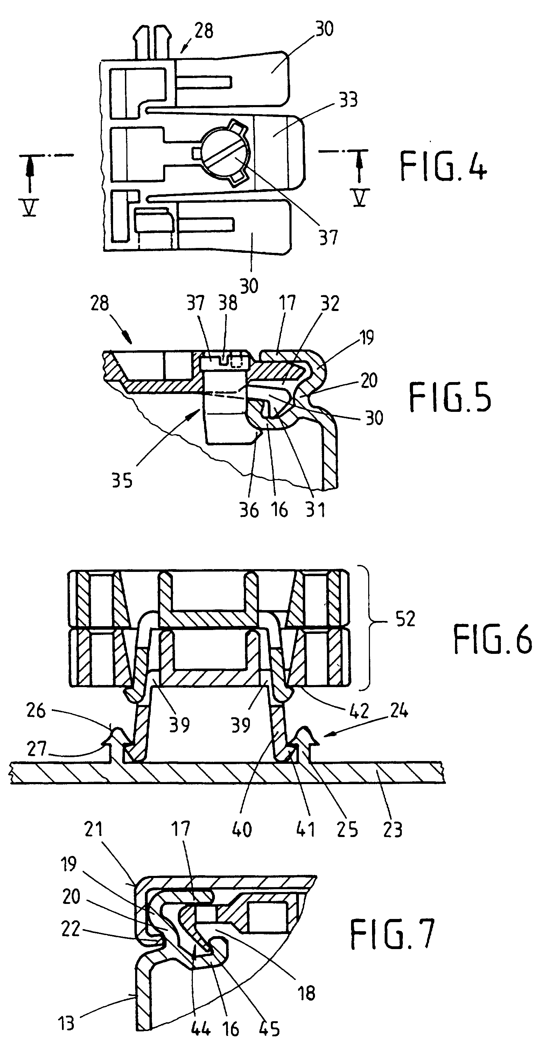

Aus der Fig. 3 der Zeichnungen ist ersichtlich, daß es sich bei der generell mit 28 bezeichneten Halteklammer um einen plattenförmigen, in Draufsicht gesehen etwa rechteckigen Körper handelt, der einstückig ist und aus einem der in der Elektroindustrie gebräuchlichen Werkstoffe gefertigt wird. Das in der Fig. 3 rechte eine Ende der Halteklammer 28 weist insgesamt zwei Verlängerungen 30 auf, die mit ihrem einen - dem rückwärtigen Ende in den Mittelteil 29 der Halteklammer 28 übergehen. Die beiden Verlängerungen 30 liegen in Abstand voneinander und schließen zwischen sich eine Zunge 33 ein. Wie die Fig. 2 und 5 der Zeichnungen am besten erkennen lassen, greifen die beiden Verlängerungen 30 und die Zunge 33 des einen Endes der Halteklammer 28 durch die Öffnung 18 des Endteiles 15 der Seitenwand 13 und kommen somit in dem Eingriffsraum 32 des gabelförmigen Endes 15 zu liegen. Dies bedeutet, daß die Verlängerungen 30 des einen Endes der Halteklammer 28 in den Eingriffsraum 32 des gabelförmigen Endteiles 15 hineinragen. Dabei liegen die beiden Verlängerungen 30 an der Innenseite des unteren Schenkels 16 des Endteiles 15 an, während die ebenfalls in den Eingriffsraum 32 hineinragende Zunge 33 an der Innenseite des oberen Schenkels 17 des gabelförmigen Endteiles 15 des Kanal-Unterteiles 11 bzw. der Seitenwände 13 anliegt. Wie die Fig. 5 der Zeichnungen am besten erkennen läßt, haben die beiden Verlängerungen 30 des Mittelteiles 29 der Halteklammer 28 jeweils ein hakenförmiges freies Ende 31, welches mit einem nicht bezeichneten, umgebogenen Ende des unteren Schenkels 16 des gabelförmigen Endteiles 15 der Seitenwand zusammenwirkt. Demgegenüber ist die zwischen den beiden Verlängerungen 30 angeordnete Zunge im wesentlichen eben gehalten und liegt flächig mit ihrer Oberseite an der Innenseite des oberen Schenkels 17 des gabelförmigen Endteils 15 an. Durch diese Gestaltung des einen Endes der Halteklammer 28 wird eine Art Scharnier gebildet. Mittels dieser scharnierartigen Gestaltung des einen Endes der Halteklammer kann der Benutzer ein Verschwenken der Halteklammer 28 durchführen, um eine Einführöffnung für das Einbringen von Kabeln, Leitungen od.dgl. in den Innenraum 54 des Kabelkanals 10 zu ermöglichen. Ist das Einbringen der Leitungen, Kabel od.dgl. in den Innenraum 54 des Kabelkanals 10 erfolgt, dann kann durch Loslassen der Halteklammer und damit durch Aufhören der äußeren Kraft auf die Halteklammer 28 diese durch die scharnierartige Gestaltung des einen Endes der Halteklammer 28 wieder in ihre wirksame Lage zurückkehren. Ein Herausgleiten der Leitungen, Kabel od.dgl. aus dem Innenraum des Kabelkanals 10 wird dadurch verhindert. Das Zurückführen der Halteklammer 28 aus ihrer Öffnungslage in die Schließlage erfolgt automatisch. Der Grund für diese Schließbewegung ist die scharnierartige Gestaltung des einen Endes der Halteklammer 28

Der andere Endteil der Halteklammer 28, und zwar der in den Zeichnungen linke Endteil, ist mit 43 bezeichnet und ist nicht in Verlängerungen und eine Zunge aufgeteilt.

An diesem Ende 43 der Halteklammer 28 ist ein Sicherheitsanker 44 vorgesehen. Dieser liegt in der in der Fig. 1 dargestellten Bereitschaftslage der Halteklammer 28 auf der Oberseite des Schenkels 17 des gabelförmigen Endteiles 15. Durch Druckeinwirkung auf die Oberseite des Endteiles kann das Ende 43 der Halteklammer 28 in die in der Fig. 2 dargestellte Endlage überführt werden. Dies bedeutet, daß durch Druckeinwirkung auf die Halteklammer diese aus der in Fig. 1 dargestellten Bereitschaftslage in die in der Fig. 2 dargestellte Endlage überführt werden kann. Durch Druckeinwirkung gleitet das Ende 43 der Halteklammer 28 vom oberen Schenkel 17 ab und gelangt dann in den Eingriffsraum 32. In dieser Endlage hintergreift das freie Ende 45 des Sicherheitsankers 44 eine Abstützfläche 46 des unteren Schenkels 16 des gabelförmigen Endteiles 15, so wie dies in der Fig. 7 der Zeichnung wiedergegeben ist.

In der in Fig. 2 dargestellten Lage der Halteklammer 28 kann diese in Längsrichtung des Kabelkanals 10 leicht verschoben werden, so daß sie von dem Benutzer des Kabelkanals 10 in die jeweils gewünschte Lage überführt werden kann. Dies bedeutet, daß man beim Anbringen der Halteklammer 28 an den Unterteil 11 nicht an die Einhaltung einer bestimmten Anbringungsstelle gebunden ist.

Um bei Bedarf ein Festlegen der Halteklammer 28 im Kabelkanalunterteil durchführen zu können, ist erfindungsgemäß der Halteklammer 28 ein Sperrelement 35 zugeordnet; dieses dient dem zeitweiligen oder gewünschtenfalls auch dem ständigen Festlegen der Halteklammer 28 im Unterteil 11. Im dargestellten Ausführungsbeispiel durchgreift das Sperrelement 35 eine Durchbrechung 34 der Zunge 33 der Halteklammer 28. Das Sperrelement 35 hat in diesem Ausführungsbeispiel einen Sperrer 36, der in seiner Sperrlage - vergleiche dazu die Fig. 5 - an der Außenseite des unteren Schenkels 16 des gabelförmigen Endteiles 15 des Unterteiles 11 anliegt. Zum Verbinden des Sperrelementes 35 mit der Zunge 33 dient eine bajonettverschlußartige Verbindung oder eine Rast-Verbindung zwischen dem Sperrelement 35 und der Zunge 33.

Aus den Fig. 4 und 5 der Zeichnung ist ferner ersichtlich, daß das Sperrelement 35 einen Kopf 37 mit einem Schlitz 38 aufweist. Auf diese Weise wird eine Angriffsfläche für ein Betätigungselement, wie einem Schraubendreher, geschaffen. Mit dessen Hilfe kann bei Bedarf das Sperrelement 35 in eine unwirksame Lage überführt werden, um das Festlegen der Halteklammer 28 am Unterteil 11 zu beenden.

Aus der Fig. 6 der Zeichnung ergibt sich, daß im Mittelteil 29 der Halteklammer 28 Durchbrechungen 39 vorgesehen sind. Diese Durchbrechungen 39 liegen symmetrisch im Bezug auf die Mitte der Halteklammer 28. Von einem der Begrenzungsränder der Durchbrechung 39 geht jeweils ein Halter 40 aus, der senkrecht zum Mittelteil 29 der Halteklammer 28 angeordnet ist, also quer zum Mittelteil 29 verläuft. An seinem vorderen freien Ende hat jeder Halter 40 einen Haltehaken 41. Diese Haltehaken 41 zeigen im gewählten Ausführungsbespiel nach außen, sind also in Richtung auf die freien Enden der Halteklammer 28 gerichtet. Gemäß der Fig. 6 der Zeichnungen sind mehrere, im gewählten Ausführungsbeispiel insgesamt zwei Halteklammer 28 zu einem Paket 52 zusammengefaßt. Um diese Paketbildung zu ermöglichen, werden die Halter 40 mit ihren Haltehaken 41 benutzt. In der Fig. 6 der Zeichnungen ist ersichtlich, daß das Halterpaar 40 der oberen Halteklammer 28 durch die Durchbrechungen 39 der unteren Halteklammer 28 hindurchgreift, derart, daß die Haltehaken 41 mit einer Gegenfläche 42 der benachbarten durchgriffenen Halteklammer 28 in Wirkverbindung treten können.

Dabei besteht, wie die Fig. 6 erkennen läßt, ferner die Möglichkeit des Festhaltens des gesamten Klammerpaketes 52 an den Halteleisten 24 des Bodens 23 des Kabelkanals 10. Daraus folgt, daß die Halter 40 der untersten Halteklammer 28 des Paketes 52 mit den Schultern 27 der Halteleiste 24 zusammenwirken, derart, daß die Haltehaken 41 hinter die Schultern 27 der Halteleisten 24 greifen. Aus dem Vorstehenden ergibt sich, daß die Haltehaken 41 der Halter 40 wahlweise mit den Schultern 27 des Kopfes 26 einer Halteleiste 24 oder zur Bildung eines Paketes 52 mit der Gegenfläche 42 einer zweiten Halteklammer 28 zusammenwirken können.

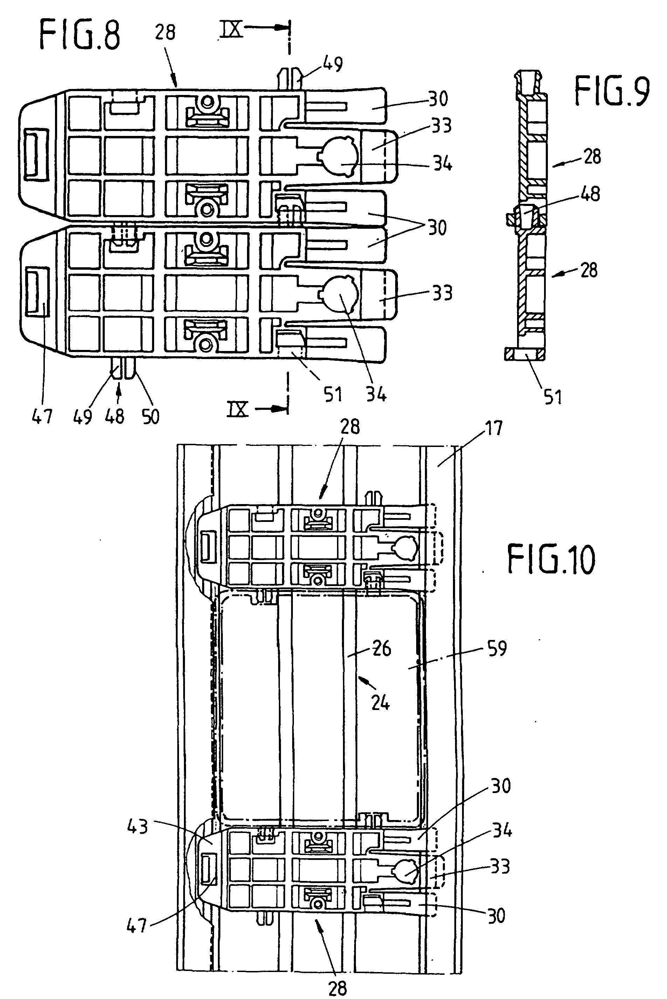

In den Fig. 8 und 9 der Zeichnungen ist dargestellt, daß man mehrere, z.B. zwei der Halteklammern 28 zu einer Kette aneinanderfügen kann. Um dieses zu ermöglichen, haben die Halteklammern 28 Kupplungen 48 und Aufnahmen 51 für solche Kupplungen. Mit diesen Kupplungen 48 und Aufnahmen 51 ist in der in Fig. 8 und 9 dargestellten Art und Weise die Bildung einer Halteklammerkette möglich. Dies bedeutet, daß bei einer Kettenbildung von Halteklammern 28, diese in horizontaler Richtung nebeneinander liegen.

Im dargestellten Ausführungsbeispiel ist jede Kupplung 48 aus zwei, durch einen Schlitz voneinander getrennte, federnde Arme 49 gebildet. Dabei weisen die Arme 49 jeder Kupplung 48 der Halteklammer 28 einen Haken oder eine Rast 50 auf, die beim Zusammenkuppeln hinter eine Begrenzungswand einer Aufnahme 51 einer zweiten Halteklammer 28 greifen.

Die Kupplungen 48 und die Aufnahmen 51 der Halteklammern 28 kann man aber auch, wie in der Fig. 10 der Zeichnungen dargestellt, zum Festhalten eines grundsätzlich bekannten elektrischen Installationsgerätes 59 benutzen. In diesem Falle sind die Halteklammern 28 in einem solchen Abstand voneinander an dem Unterteil 11 des Kabelkanals 10 angeordnet, der etwa der Breite des elektrischen Installationsgerätes 59 entspricht. Mittels der Kupplungen 48 und der Aufnahmen 50, die nicht nur an der Halteklammer 28, sondern auch an dem elektrischen Installationsgerät 59 angeordnet sind, kann man dann eine Verbindung zwischen den beiden Halteklammern 28 und dem elektrischen Installationsgerät 59 herstellen, so wie dies in der Fig. 10 gezeigt ist. Eine solche, aus zwei Halteklammern 28 und dem elektrischen Installationsgerät 59 gebildete Baueinheit kann man im Unterteil 41 des Kabelkanals verschieben. Ist dann die gewünschte Lage dieses Bauteiles im Inneren des Unterteils des Kabelkanals 10 erreicht, dann kann man die beiden, den Halteklammern 28 zugeordneten Sperrelemente 35 benutzen und eine Lagesicherung der Baueinheit am Unterteil 11 erzielen.

In der Fig. 8 der Zeichnungen ist noch erkennbar, daß im Bereich des einen Endes 43 der Halteklammer 28 ein Durchbruch 47 vorhanden ist, der oberhalb des freien Endes 45 des Sicherheitsankers 44 liegt. Durch den Durchbruch 47 ist das freie Ende 45 des Sicherheitsankers 44 zugänglich.

Aus den Fig. 1 und 2 der Zeichnungen ist ersichtlich, daß der großvolumige Unterbringungsraum 54 des Unterteiles 11 des Kabelkanals 10 in einzelne Kammern unterteilt ist, und zwar durch Benutzung von mehreren, generell mit 53 bezeichneten Trennwänden. Jede dieser Trennwände 53 ist einstückig aus einem der in der Elektroindustrie gebräuchlichen Werkstoffe hergestellt. Das eine Ende der Trennwand 53, und zwar das dem Boden 23 zugekehrte, ist gabelförmig gestaltet, wobei die beiden Gabeln mit 55 bezeichnet sind. Eine der beiden Gabelarme 55 läuft in einen Haltehaken 56 aus, der in der in den Fig. 1 und 2 gezeichneten Weise hinter die Schulter 27 der Halteleiste 24 greift.

Das gegenüberliegende andere Ende der Trennwand 53 ist als Stützende 57 ausgebildet. Dieses Stützende 57 liegt in der in Fig. 2 dargestellten Art und Weise innerhalb eines Eingriffsraumes 58 an der Unterseite der Halteklammer 28. Im gewählten Ausführungsbeispiel sind zwei Trennwände 53 vorhanden, so daß der Unterbringungsraum 54 des Unterteils 11 des Kabelkanals 10 in drei Kammern unterteilt ist.

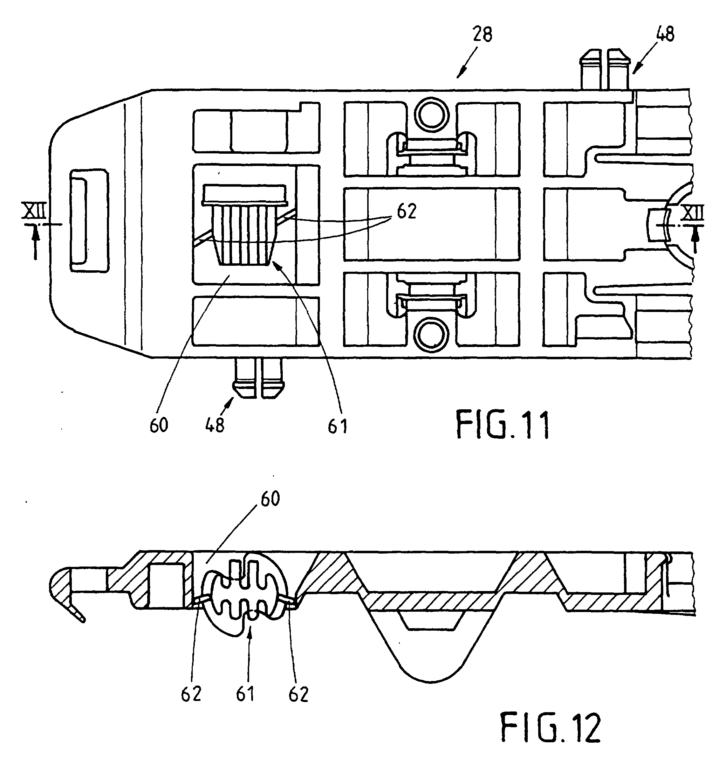

In den Fig. 11 und 12 der Zeichnungen ist eine weitere Ausführungsform einer Halteklammer 28 dargestellt. Diese unterscheidet sich von den vorangegangenen dadurch, daß das Sperrelement kein separater Körper ist, sondern unverlierbar mit der Halteklammer 28 verbunden ist. Demgemäß ist in einem etwa quadratischen Durchbruch 60 der Halteklammer 28 ein nunmehr mit 61 bezeichnetes Sperrelement angeordnet, das über Haltestege 62 mit den Begrenzungswandungen des Durchbruches 60 verbunden ist. Im gewählten Ausführungsbeispiel sind zwei Haltestege 62 vorgesehen. Diese liegen auf gegenüberliegenden Seiten des Sperrelementes 61 und sind um etwa 30° geneigt zur Horizontalen.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. So ist es nicht zwingend erforderlich, zur Lagesicherung der ein und demselben Kabelkanal 10 zugeordneten Halteklammern 28 ein Paket 52 zu bilden, um dieses dann als Ganzes an den Halteleisten 24 lösbar festzulegen. Vielmehr besteht auch die Möglichkeit, jede einzelne Halteklammer 28 mit den Halteleisten 24 am Boden des Kabelkanals 10 festzulegen. In diesem Falle umgreifen dann jeweils die Haltehaken 41 jeder Halteklammer 28 die Schultern 27 der Halteleisten 24. Es erfolgt dabei eine Hintereinanderanordnung von Halteklammern 28 auf den Halteleisten 24. Dies bedeutet, daß in Längsrichtung der Halteleisten 24 gesehen eine Hintereinanderanordnung von Halteklammern 28 vorliegt. Die Kupplungen zur Herstellung einer Halteklammernkette oder zum Festhalten eines elektrischen Installationsgerätes können eine andere als die dargestellte Ausbildung erhalten. Dies gilt selbstverständlich dann auch für die Aufnahmen, die in einer Halteklammer oder in einem elektrischen Installationsgerät vorhanden sind, und die dem Zusammenwirken mit den Kupplungen dienen.

### Bezugszeichenliste:

- 10 -: Kabelkanal
- 11 -: Unterteil (von 10)
- 12 -: Oberteil (von 10)
- 13 -: Seitenwand
- 14 -: Schräge (von 13)
- 15 -: gabelförmiger Endteil (von 13)
- 16 -: unterer Schenkel (von 15)
- 17 -: oberer Schenkel (von 15)
- 18 -: Öffnung (zwischen 16 und 17)
- 19 -: Verbindungssteg (zwischen 16 und 17)
- 20 -: Einbuchtung (in 19)
- 21 -: Abwinkelung (von 12)
- 22 -: Halteteil (von 21)
- 23 -: Boden (von 11)
- 24 -: Halteleiste (an 23)
- 25 -: Verbindungssteg
- 26 -: Kopf (von 24)
- 27 -: Schulter (von 26)
- 28 -: Halteklammer
- 29 -: Mittelteil (von 28)
- 30 -: Verlängerung (an einem Ende von 29)
- 31 -: hakenförmiges freies Ende (von 30)
- 32 -: Eingriffsraum (zwischen 16 und 17)
- 33 -: Zunge (an einem Ende von 29)
- 34 -: Durchbrechung (in 33)
- 35 -: Sperrelement (in 34) I. Ausführung
- 36 -: Sperrer (von 35)
- 37 -: Kopf (von 35)
- 38 -: Schlitz (in 37)
- 39 -: Durchbrechung (in 29)
- 40 -: Halter (an 29)
- 41 -: Haltehaken (an 40)
- 42 -: Gegenfläche (an 29 für 41)
- 43 -: einer der beiden Endteile (von 28)
- 44 -: Sicherheitsanker (an 43)
- 45 -: freies Ende (von 44)
- 46 -: Abstützfläche (an 16)
- 47 -: Durchbruch (in 43)
- 48 -: Kupplung (von 28)
- 49 -: Arm (von 48)
- 50 -: Haken (Rast) (an 49)
- 51 -: Aufnahme (in 28 für 48)
- 52 -: Klammerpaket
- 53-: Trennwand
- 54 -: Unterbringungsraum (in 11)
- 55 -: Gabelarme (von 53)
- 56 -: Haltehaken (an 55)
- 57 -: Stützende (von 53)
- 58 -: Eingriffsraum (in 28 für 57)
- 59 -: elektrisches Installationsgerät (in 54)
- 60 -: Durchbruch (in 28 - Fig. 11 u. 12)
- 61 -: Sperrelement; II. Ausführung
- 62 -: Haltesteg (für 61)

## Patentansprüche

1. Kabelkanal, wie Installations- oder Geräteeinbaukanal, bestehend aus einem einendig offenen Unterteil (11) und einem damit lösbar verbindbaren, deckelartigen Oberteil (12), wobei der Unterteil (11) an seinem Boden (23) in Längsrichtung verlaufende Halteleisten (24) und im oberen Bereich seiner Seitenwände (13) aufeinander zu gerichtete Endteile (15) aufweist, die mit Halteklammern (28) zusammenwirken und mit Einrichtungen zum Verbinden der Halteklammer (28) mit den Halteleisten (24) des Bodens (23) und zum zeitweiligen Verbinden mehrerer Halteklammern (28) zu einem Paket (52), wobei die Endteile (15) der Seitenwände (13) des Kabelkanalunterteils (11) des Kabelkanals (10) je eine Öffnung (18) aufweisen, in die einerseits Verlängerungen (30) und eine Zunge (33) des einen Endes der Halteklammer (28) eingreifen, während andererseits das gegenüberliegende andere Ende (43) der Halteklammer (28) einen die Öffnung durchgreifenden Sicherheitsanker (44) aufweist, und der an dem einen Ende (43) der Halteklammer (28) angeordnete Sicherheitsanker (44) in der Bereitschaftslage der Halteklammer (28) auf der Oberseite des Schenkels (17) des einen der gabelförmig gestalteten Endteile (15) liegt und durch Druckeinwirkung in seine wirksame Endlage überführbar ist, in der das freie Ende (45) des Sicherheitsankers (44) eine Abstützfläche (46) des unteren Schenkels (16) des gabelförmigen Endteiles (15) der Seitenwand (13) des Unterteils (11) hintergreift.

2. Kabelkanal nach Anspruch 1, dadurch gekennzeichnet, daß der Halteklammer (28) ein Sperrelement (35) zu seinem zeitweiligen Festlegen an einem der beiden gabelförmigen Endteile (15) des Kabelkanales zugeordnet ist.

3. Kabelkanal nach Anspruch 2, dadurch gekennzeichnet, daß das Sperrelement (35) eine Durchbrechung (34) der Halteklammer (28) durchgreift und einen Sperrer (36) aufweist, der in seiner Sperrlage an der Außenseite des unteren Schenkels (16) des gabelförmigen Endteiles (15) des Unterteils (11) anliegt. (Fig. 5)

4. Kabelkanal nach Anspruch 2 und 3, dadurch gekennzeichnet, daß das Sperrelement (35) einen Kopf (37) mit einem Schlitz (38) zum Angriff eines Befestigungsgerätes, wie eines Schraubendrehers, aufweist.

5. Kabelkanal nach einem der vorhergehenden Ansprüche, dadurch gekennzeichnet, daß der Verbindungssteg (19) zwischen den Schenkeln (16 bzw. 17) des gabelförmigen Endteiles (15) eine Einbuchtung (20) zum Eingriff des Halteteiles (22) des deckelartigen Oberteils (12) aufweist.

6. Kabelkanal nach einem der vorhergehenden Ansprüche, dadurch gekennzeichnet, daß an der einen Seite des Mittelteiles (29) der Halteklammer (28) nach außen vorragende Halter (40) mit Haltehaken (41) angeordnet sind.

7. Kabelkanal nach Anspruch 6, dadurch gekennzeichnet, daß die Haltehaken (41) der Halter (40) wahlweise mit der Schulter (27) des Kopfes (26) einer Halteleiste (24) des Bodens (23) des Kabelkanals (10) oder zur Bildung eines Paketes (52) von Halteklammern (28) mit der Gegenfläche (42) einer zweiten Halteklammer (28) zusammenwirken. (Fig. 6)

8. Kabelkanal nach Anspruch 6 und 7, dadurch gekennzeichnet, daß die Halter (40) der Halteklammer (28) an dem einen Begrenzungsrand einer Durchbrechung (39) des Mittelteiles (29) der Halteklammer (28) angeordnet sind.

9. Kabelkanal nach Anspruch 4, dadurch gekennzeichnet, daß die Durchbrechung (34) für das Sperrelement (35) in der Zunge (33) angeordnet ist. (Fig. 8 u. 10)

10. Kabelkanal nach einem der vorangehenden Ansprüche, dadurch gekennzeichnet, daß die Halteklammer (28) Kupplungen (48) und Aufnahmen (51) für solche Kupplungen (48) zur Bildung einer Halteklammernkette aufweist. (Fig. 8)

11. Kabelkanal nach Anspruch 10, dadurch gekennzeichnet, daß jede Kupplung (48) aus zwei durch einen Schlitz voneinander getrennte, federnde Arme (49) gebildet ist.

12. Kabelkanal nach Anspruch 11, dadurch gekennzeichnet, daß die Arme (49) jeder Kupplung (48) der Halteklammer (28) einen Haken oder eine Rast (50) aufweisen, die beim Zusammenkuppeln hinter eine Begrenzungswand einer Aufnahme (51) einer zweiten Halteklammer (28) greifen. (Fig. 8)

13. Kabelkanal nach einem der vorangehenden Ansprüche, dadurch gekennzeichnet, daß zwei an einem Kabelkanal (10) im Abstand voneinander angeordnete Halteklammern (28) zum Festhalten eines elektrischen Installationsgerätes (59) im Unterbringungsraum (54) des Kabelkanals (10) benutzbar sind. (Fig. 10)

14. Kabelkanal nach Anspruch 13, dadurch gekennzeichnet, daß das elektrische Installationsgerät (59) Kupplungen und Aufnahmen aufweist, die mit den Kupplungen (48) und Aufnahmen (51) zweier Halteklammern (28) zusammenwirken. (Fig. 10)

15. Kabelkanal nach einem der vorangehenden Ansprüche, dadurch gekennzeichnet, daß die Halteklammer (28) Eingriffsräume (58) für die Stützenden (57) von Trennwänden (53) aufweisen, deren andere Enden mit Halteleisten (24) am Boden (23) des Kabelkanals (10) zusammenwirken. (Fig. 1 u. 2)

16. Kabelkanal nach Anspruch 3, dadurch gekennzeichnet, daß das Sperrelement (35) über eine Bajonettverschlußverbindung oder eine Rast-Verbindung mit der Zunge (33) der Halteklammer (20) verbindbar ist.

17. Kabelkanal nach Anspruch 16, dadurch gekennzeichnet, daß das Sperrelement (61) unverlierbar mit der Halteklammer (28) verbunden ist.

18. Kabelkanal nach Anspruch 17, dadurch gekennzeichnet, daß das Sperrelement (61) über Haltestege (62) mit der Halteklammer (28) verbunden ist.

19. Kabelkanal nach Anspruch 18, dadurch gekennzeichnet, daß die Haltestege (62) auf gegenüberliegenden Seiten des Sperrelementes (61) angeordnet sind und mit ihren rückwärtigen Enden jeweils in eine Begrenzungswand eines Durchbruches (60) der Halteklammer (28) einmünden.

20. Kabelkanal nach den Ansprüchen 17 bis 19, dadurch gekennzeichnet, daß die biegsamen Haltestege (62) um etwa 30° geneigt zur Horizontalen angeordnet sind.

## Claims

1. A cable duct, such as an electrical installation duct or apparatus mounting duct, consisting of a lower section (11) open at one end and a lid-like upper section (12) with a detachable connection to said lower section, whereby said lower section (11) has on its bottom (23) holding strips (24) running in longitudinal direction and, in the upper area of its side walls (13), end parts (15) facing each other which interact with holding clips (28) and with features to connect the holding clips (28) to the holding strips (24) of the bottom (23) and for the temporary connection of several holding clips (28) to form a package (52), whereby the end parts (15) of the side walls (13) of the lower section (11) of the cable duct (10) each exhibit one opening (18) into which, on the one hand, extensions (30) and a tongue (33) of the one end of the holding clip (28) engage while, on the other hand, the opposite other end (43) of the holding clip (28) exhibits a safety anchor (44) protruding through the opening, and the safety anchor (44) located at the one end (43) of the holding clip (28) rests in the standby position of the holding clip (28) on the upper side of the leg (17) of one of the end parts (15) designed like a fork and can be converted by the action of pressure into its effective end position in which the free end (45) of the safety anchor (44) grips behind a support surface (46) of the bottom leg (16) of the fork-shaped end part (15) of the side wall (13) of the lower section (11).

2. A cable duct according to claim 1, characterised in that the holding clip (28) is allocated a locking element (35) for its temporary fixture to one of the two fork-shaped end parts (15) of the cable duct.

3. A cable duct according to claim 2, characterised in that the locking element (35) penetrates an opening (34) in the holding clip (28) and has a lock (36) which, in its locking position, rests against the outside of the lower leg (16) of the fork-shaped end part (15) of the lower section (11). (Fig. 5).

4. A cable duct according to claims 2 and 3, characterised in that the locking element (35) has a head (37) with a slit (38) for the engagement of a fastening device like a screwdriver.

5. A cable duct according to one of the preceding claims, characterised in that the connection web (19) between the legs (16 and 17) of the fork-shaped end part (15) exhibits an indentation (20) for engaging the holding part (22) of the lid-like upper section (12).

6. A cable duct according to one of the preceding claims, characterised in that holders (40) protruding outwards with holding hooks (41) are arranged on the one side of the central part (29) of the holding clip (28).

7. A cable duct according to claim 6, characterised in that the holding hooks (41) of the holders (40) interact optionally with the shoulder (27) of the head (26) of a holding strip (24) of the bottom (23) of the cable duct (10) or, to form a package (52) of holding clips (28), with the mating surface (42) of a second holding clip (28). (Fig. 6).

8. A cable duct according to claims 6 and 7, characterised in that the holders (40) of the holding clips (28) are arranged on the one limiting edge of an opening (39) of the middle section (29) of the holding clip (28).

9. A cable duct according to claim 4, characterised in that the opening (34) for the locking element (35) is located in the tongue (33). (Figs. 8 and 10).

10. A cable duct according to one of the preceding claims, characterised in that the holding clip (28) has couplings (48) and receptacles (51) for such couplings (48) to form a holding clip chain. (Fig. 8).

11. A cable duct according to claim 10, characterised in that each coupling (48) is formed by two resilient arms (49) separated from each other by a slot.

12. A cable duct according to claim 11, characterised in that the arms (49) of each coupling (48) of the holding clip (28) has a hook or a catch (50) which on engagement, grips behind a limiting wall of a receptacle (51) of a second holding clip (28). (Fig. 8).

13. A cable duct according to one of the preceding claims, characterised in that two holding clips (28) arranged at a distance from each other on one cable duct (10) can be used to hold an electrical installation apparatus (59) in the accommodation chamber (54) of the cable duct (10). (Fig. 10).

14. A cable duct according to claim 13, characterised in that the electrical installation apparatus (59) has couplings and receptacles which interact with the couplings (48) and receptacles (51) of two holding clips (28). (Fig. 10).

15. A cable duct according to one of the preceding claims, characterised in that the holding clips (28) have meshing spaces (58) for the support ends (57) of partition walls (53) whose other ends interact with holding strips (24) on the bottom (23) of the cable duct (10). (Figs. 1 and 2).

16. A cable duct according to claim 3, characterised in that the locking element (35) can be joined by means of a bayonet catch connection or a catch connection to the tongue (33) of the holding clip (28).

17. A cable duct according to claim 16, characterised in that the locking element (61) is inseparably connected to the holding clip (28).

18. A cable duct according to claim 17, characterised in that the locking element (61) is joined to the holding clip (28) by means of holding webs (62).

19. A cable duct according to claim 18, characterised in that the holding webs (62) are arranged on opposite sides of the locking element (61) and merge with their rear ends into a limiting wall of an opening (60) in the holding clip (28).

20. A cable duct according to claims 17 to 19, characterised in that the flexible holding webs (62) are arranged at an angle of roughly 30° to the horizontal.

## Revendications

1. Canal pour câbles, telle que canalisation pour le montage d'installation ou d'appareil, se composant d'une partie inférieure (11) ouverte à une extrémité et d'une partie supérieure (12) formant couvercle et susceptible d'être reliée de façon amovible, dans lequel canal la partie inférieure (11) comporte sur son fond (23) des barrettes de retenue (24) courant dans la direction longitudinale et dans la zone supérieure de ses parois latérales (13) des parties d'extrémité (15) tournées l'une vers l'autre et qui coopèrent avec des brides de retenue (28), et le canal comportant des organes pour relier les brides de retenue (28) aux barrettes de retenue (24) du fond (23) et pour relier temporairement plusieurs brides de retenue (28) en un paquet (52), dans lequel canal les parties d'extrémité (15) des parois latérales (13) de la partie inférieure (11) de la canalisation (10) pour câbles présentent chacune une ouverture (18) dans laquelle d'une part s'engagent des prolongements (30) et une languette (33) de l'une des extrémités de la bride de retenue (28), tandis que d'autre part, l'autre extrémité (43) située à l'opposé, de la bride de retenue (28) présente un crochet ou une ancre de sécurité (44) traversant l'ouverture, et ce crochet de sécurité (44) placé à une extrémité (43) de la bride de retenue (28), dans la position de préparation de la bride de retenue (28), venant se placer sur la face supérieure de la branche (17) de l'une des parties d'extrémité (15) présentant une conformation en fourche et étant susceptible d'être déplacé par pressage dans sa position terminale active, dans laquelle l'extrémité libre (45) du crochet de sécurité (44) accroche par dessous une surface d'appui (46) de la branche inférieure (16) de la partie d'extrémité (15) en forme de fourche de la paroi latérale (13) de la partie inférieure (11).

2. Canal pour câbles selon la revendication 1, caractérisé en ce que la bride de retenue (28) est associée à un élément de blocage (35) pour sa fixation temporaire à l'une des deux parties d'extrémité (15) en forme de fourche du canal pour câbles.

3. Canal pour câbles selon la revendication 2, caractérisé en ce que l'élément de blocage (35) traverse un évidement (34) de la bride de retenue (28) et comporte un organe de blocage (36) qui s'appuie dans sa position de blocage sur la face extérieure de la branche inférieure (16) de la partie d'extrémité (15) en forme de fourche de la partie inférieure (11) (figure 5).

4. Canal pour câbles selon la revendication 2 et 3, caractérisé en ce que l'élément de blocage (35) comporte une tête (37) avec une fente (38) pour l'engagement d'un appareil de fixation, tel qu'un tournevis.

5. Canal pour câbles selon l'une des revendications précédentes, caractérisé en ce que la branche de liaison (19), entre les branches (16 ou 17) de la partie d'extrémité (15) en forme de fourche, présente une partie en creux (20) pour l'engagement de la partie de retenue (22) de la partie supérieure (12) formant couvercle.

6. Canal pour câbles selon l'une des revendications précédentes, caractérisé en ce que sur l'une des faces de la partie médiane (29) de la bride de retenue (28) sont disposés des appuis (40) faisant saillie vers l'extérieur et munis de crochets de retenue (41).

7. Canal pour câbles selon la revendication 6, caractérisé en ce que les crochets de retenue (41) des appuis (40) coopèrent au choix avec l'épaulement (27) de la tête (26) d'une barrette de retenue (24) du fond (23) de la canalisation pour câbles (10) ou bien pour réaliser un paquet (52) de brides de retenue (28) avec la surface conjuguée (42) d'une deuxième bride de retenue (28). (figure 6).

8. Canal pour câbles selon les revendications 6 et 7, caractérisé en ce que les appuis (40) de la bride de retenue (28) sont disposés sur l'une des bandes de délimitation d'un évidement traversant (39) de la partie médiane (29) de la bride de retenue (28).

9. Canal pour câbles selon la revendication 4, caractérisé en ce que l'évidement traversant (34) pour l'élément de blocage (35) est disposé dans la languette (33). (figures 8 et 10).

10. Canal pour câbles selon l'une des revendications précédentes, caractérisé en ce que la bride de retenue (28) comporte des coupleurs (48) et des logements de réception (51) pour de tels coupleurs (48) pour former une chaîne de brides de retenue (figure 8).

11. Canal pour câbles selon la revendication 10, caractérisé en ce que chaque coupleur (48) est formé de deux bras élastiques (49) séparés l'un de l'autre par une fente.

12. Canal pour câbles selon la revendication 11, caractérisé en ce que les bras (49) de chaque coupleur (48) de la bride de retenue (28) comportent un crochet ou un verrou (50) qui à l'accouplement avec une autre bande, s'accroche derrière une paroi de délimitation d'un logement de réception (51) d'une deuxième bride de retenue (28) (figure 8).

13. Canal pour câbles selon l'une des revendications précédentes, caractérisé en ce que deux brides de retenue (28) disposées à distance l'une de l'autre sur un canal (10) pour câbles sont utilisables pour fixer un appareil électrique d'installation (59) dans l'espace de logement (54) du canal (10) pour câbles. (figure 10).

14. Canal pour câbles selon la revendication 13, caractérisé en ce que l'appareil (59) pour installation électrique comporte des coupleurs et des logements qui coopèrent avec les coupleurs (48) et les logements (51) de deux brides de retenue (28). (figure 10).

15. Canal pour câbles selon l'une des revendications précédentes, caractérisé en ce que les brides de retenue (28) comportent des espaces (58) d'engagement pour les extrémités d'appui (57) de parois de séparation (53), dont les autres extrémités coopèrent avec des barrettes de retenue (24) sur le fond (23) du canal (10) pour câbles. (figures 1 et 2).

16. Canal pour câbles selon la revendication 3, caractérisé en ce que l'élément de blocage (35) est susceptible d'être relié à la languette (33) de la bride de retenue (28) par une liaison à fermeture baïonnette ou une liaison de verrouillage.

17. Canal pour câbles selon la revendication 16, caractérisé en ce que l'élément de blocage (61) est relié à la bride de retenue (28) de façon imperdable.

18. Canal pour câbles selon la revendication 17, caractérisé en ce que l'élément de blocage (61) est relié par des traverses de retenue (62) à la bride de retenue (28).

19. Canal pour câbles selon la revendication 18, caractérisé en ce que les traverses de retenue (62) sont disposées sur des faces opposées de l'élément de blocage (61) et débouchent par leurs extrémités arrière chacune dans une paroi de délimitation d'un évidement traversant (60) de la bride de retenue (28).

20. Canal pour câbles selon les revendications 17 à 19, caractérisé en ce que les traverses de retenue flexibles (62) sont disposées inclinées à environ 30° par rapport à l'horizontale.
